# EUROPEAN PATENT APPLICATION

(11) **EP 3 208 182 A1**
(43) Date of publication of application: **23.08.2017**
(21) Application number: 17156275.4
(22) Date of filing: 15.02.2017
(51) Int. Cl.: B62H 1/02

(54) **KICKSTAND**

(30) Priority: 17.02.2016 IT UB20160817
(71) Applicant: URSUS S.p.A., 36027 Rosà (VI) (IT)
(72) Inventor: FERRONATO, Sergio, 36027 ROSA' VI (IT)
(74) Representative: Modiano, Micaela Nadia

(57) **Abstract**

A kickstand (10) comprising
- a supporting rod (11), comprising a rod-like body (12) and a pivoting head (13)
- a pivoting block (14), comprising two opposite lateral walls (15, 16), between which the pivoting head (13) is pivoted, a front wall (17) with a lower edge (17a) and a rear wall (18) with a lower edge (27),
- inside the block (14) there is a compartment (20) for the rotation of the pivoting head (13); reversible locking means (21) for the retention of the supporting rod (11) in one of two configurations are provided, which comprise
- an elastic element (22), arranged so as to push between a support (23) that is integral with the block (14) and a plate element (24),
- a cam-like profile (25), formed on the pivoting head (13) and arranged in contact with the plate element (24).

The cam-like profile (25) comprises a rotation-preventing abutment surface (26), the position of the plate element (24) against the abutment surface (26) determining the stability of the raised inactive configuration of the rod (11); moreover, the rear wall (18) of the block (14) and the supporting rod (11) are shaped so that with the supporting rod (11) in the raised inactive configuration, between the pivoting head (13) and the lower edge (27) of the rear wall (18) there is a spacing interspace (28) designed to prevent contact between the head (13) and the lower edge (27).

## Description

The present invention relates to a kickstand.

Typically, a bicycle kickstand comprises a frame fixing bracket, to which a supporting rod is articulated which has a pivoting head coupled rotatably between two opposite walls of an articulation fork, which in turn is formed on a block that protrudes from the bracket.

A compartment for the rotation of the pivoting head is formed between the walls; elastic means for retaining the supporting rod in a raised configuration are present between the bracket and the pivoting head inside the block.

Currently, particularly for electric bicycles, kickstands in the raised configuration, therefore during travel, due to the unevenness of the road surface, perform jiggling motions, allowed by the elastic means that retain the rod in the raised configuration.

The jiggling motions of the rod create an unpleasant noise, which is caused by the sequence of impacts of the rod against a stroke limiting edge that is formed on the block, said impacts in turn being caused by the oscillations of the supporting rod, a sort of ticking that annoys the rider, giving him/her the feeling that the kickstand is not of good quality.

The aim of the present invention is to provide a kickstand that is capable of obviating the limitations shown by the mentioned kickstands of the known type.

Within this aim, an object of the invention is to provide a kickstand that is less noisy than similar kickstands of the known type when traveling on more or less uneven paths.

Another object of the invention is to provide a kickstand that is simple and straightforward to manage like kickstands of the known type.

A further object of the invention is to provide a kickstand that is simple to provide and assemble.

This aim, as well as these and other objects that will become better apparent hereinafter, are achieved by a kickstand according to claim 1.

Further characteristics and advantages of the invention will become better apparent from the description of a preferred but not exclusive embodiment of the kickstand according to the invention, illustrated by way of nonlimiting example in the accompanying drawings, wherein:
Figure 1 is a side view of a kickstand according to the invention with the rod in the raised inactive configuration;
Figure 2 is a sectional side view of a detail of Figure 1;
Figure 3 is a side view of the kickstand according to the invention with the rod in the lowered active configuration;
Figure 4 is a sectional side view of a detail of Figure 3.

With reference to the figures, a kickstand according to the invention is generally designated in its first embodiment by the reference numeral 10.

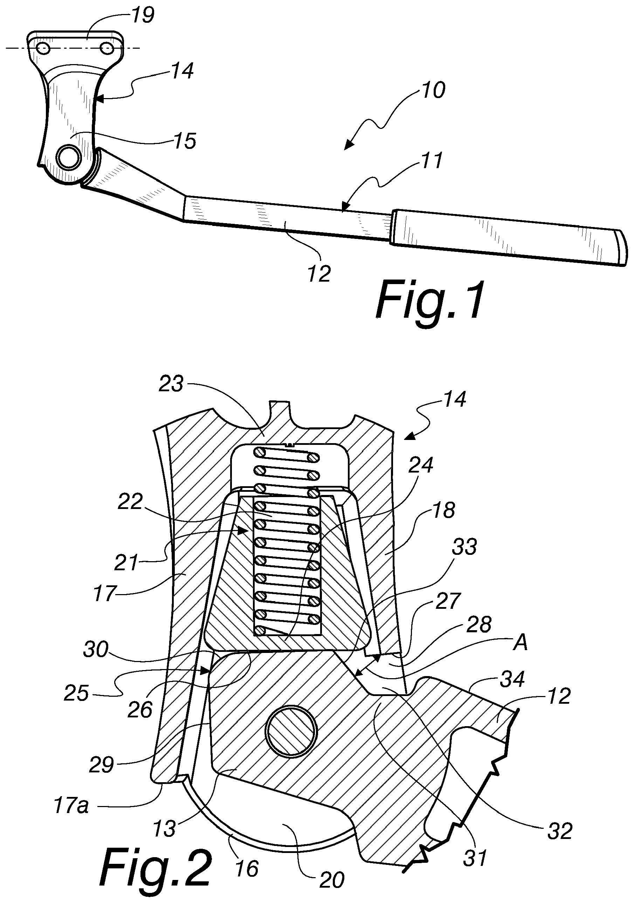

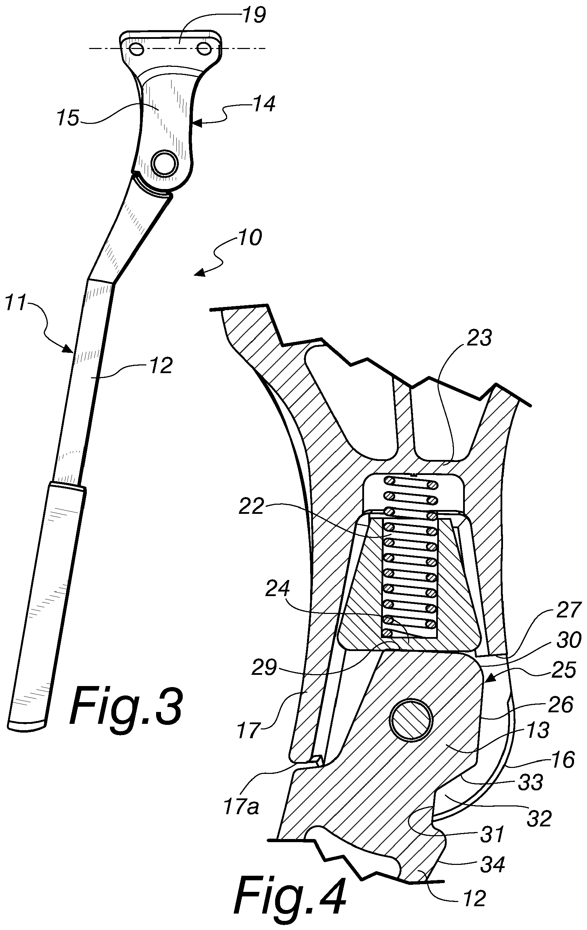

The kickstand 10 is of the type that comprises
- a supporting rod 11, which comprises a rod-like body 12 and a pivoting head 13,
- a pivoting block 14, which comprises two opposite lateral walls 15 and 16, between which the pivoting head 13 is pivoted, a front wall 17 with a lower edge 17a and a rear wall 18 with a lower edge 27,
- a bracket 19, for fixing the pivoting block 14 to a bicycle frame, which is not shown since it is not part of the present invention,
- inside the block 14 there is a compartment 20 for the rotation of the pivoting head 13 between a raised inactive configuration for the supporting rod 11, as shown in Figure 1, and a lowered active configuration, as shown in Figure 3; there are reversible locking means 21 for retaining the supporting rod 11 in one of the two configurations.

The reversible locking means 21 comprise:
- an elastic element 22, for example a helical spring, which is arranged so as to push between a support 23 that is integral with the block 14 and a plate element 24, which is free to translate within the block 14 in the direction of the thrust of the elastic element 22,
- a cam-like profile 25, which is formed on the pivoting head 13 and is arranged in contact with the plate element 24.

The particularity of the kickstand 10 according to the invention resides in that:
- the cam-like profile 25 comprises a rotation-preventing abutment surface 26; the position of the plate element 24 against said rotation-preventing abutment surface 26 determines the stability of the raised inactive configuration of the supporting rod 11;
- furthermore, the rear wall 18 of the block 14 and the rod 11 are shaped so that when the supporting rod 11 is in the raised inactive configuration, between the pivoting head 13 and the lower edge 27 of the rear wall 18 there is a spacing interspace 28 that is designed to prevent contact between the head 13 and the lower edge 27.

By virtue of such a kickstand 10, when the rod 11 is in the raised inactive configuration, as shown in Figures 1 and 2, there is no contact between the rod 11 and the lower edge 27 of the rear wall 18 of the block 14, and the vibrations to which the rod is subjected do not cause serial impacts of the latter against the lower edge 27, since the vibrations are absorbed by the elastic element 22 by means of the planar contact between the plate element 24 and the rotation-preventing abutment surface 26 of the pivoting head 13.

The plate element 24 is retained by the elastic element 22 constantly in contact with the rotation-preventing surface 26, so that the vibrations of the rod 11, i.e., the oscillations about the rotation axis of the latter, do not cause any noise and any unpleasant clacking that is typical of known kickstands is eliminated.

In particular, furthermore, in the exemplifying embodiment of the invention described herein the cam-like profile 24 comprises a second rotation-preventing abutment surface 29 and a connecting portion 30 between the two rotation-preventing abutment surfaces 26 and 29; the position of the plate element 24 against the second rotation-preventing abutment surface 29 determines the stability of the lowered active configuration of the supporting rod 11, as shown in Figures 3 and 4.

The spacing interspace 28 is determined by a recess 32 that is formed on the rod 11.

The recess 32 is formed on the supporting rod 11 at a connecting region 31 between the rod-like body 12 and the cam-like profile 25 of the pivoting head 13; the surface 33 of the recess 32 is extended between the upper external surface 34 of the rod-like body 12 and the rotation-preventing abutment surface 26.

A minimum distance A of 3 millimeters is defined between the recess 31 and the lower edge 27 of the rear wall 18.

The first rotation-preventing abutment surface 26 is flat, so as to rest against the plate not in a small number of points but on a large surface.

The second rotation-preventing abutment surface 29 also is flat.

In practice it has been found that the invention achieves the intended aim and objects.

In particular, the invention provides a kickstand that is far less noisy than similar kickstands of the known type when traveling over more or less uneven paths, by virtue of the lack of contact and of the distance that is interposed between the rod and the lower edge of the rear wall of the block, in the point where the unpleasant contact clacking is usually generated.

Moreover, the invention provides a kickstand that is simple to provide and assemble.

The invention thus conceived is susceptible of numerous modifications and variations, all of which are within the scope of the appended claims; all the details may further be replaced with other technically equivalent elements.

In practice, the components and materials used, so long as they are compatible with the specific use, as well as the contingent shapes and dimensions, may be any according to the requirements and the state of the art.

The disclosures in Italian Patent Application No. 102016000016006 (UB2016A000817) from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A kickstand (10), of the type comprising
- a supporting rod (11), comprising a rod-like body (12) and a pivoting head (13)
- a pivoting block (14), comprising two opposite lateral walls (15, 16), between which said pivoting head (13) is pivoted, a front wall (17) with a lower edge (17a) and a rear wall (18) with a lower edge (27),
- a bracket (19) for fixing the pivoting block (14),
- inside the block (14) there being a compartment (20) for the rotation of said pivoting head (13) between a raised inactive configuration for the supporting rod (11) and a lowered active configuration and reversible locking means (21) for the retention of the supporting rod (11) in one configuration of two configurations, said reversible locking means (21) comprising
- an elastic element (22), arranged so as to push between a support (23) that is integral with the block (14) and a plate element (24), which is free to translate inside said block (14) in the direction of the thrust of the elastic element (22),
- a cam-like profile (25), formed on the pivoting head (13) and arranged in contact with said plate element (24),
said kickstand (10) being **characterized in that**
- said cam-like profile (25) comprises a rotation-preventing abutment surface (26), the position of said plate element (24) against said rotation-preventing abutment surface (26) determining the stability of the raised inactive configuration of the supporting rod (11),
- said rear wall (18) of the block (14) and said supporting rod (11) being shaped so that with the supporting rod (11) in the raised inactive configuration, between said pivoting head (13) and the lower edge (27) of said rear wall (18) there is a spacing interspace (28) designed to prevent contact between the head (13) and the lower edge (27).

2. The kickstand according to claim 1, **characterized in that** said cam-like profile (24) comprises a second rotation-preventing abutment surface (29) and a connecting portion (30) between said two rotation-preventing abutment surfaces (26, 29), the placement of said plate element against said second rotation-preventing abutment surface (29) defining the stability of the lowered active configuration of the supporting rod (11).

3. The kickstand according to one or more of the preceding claims, **characterized in that** said spacing interspace (28) is determined by a recess (32) formed on the rod (11).

4. The kickstand according to one or more of the preceding claims, **characterized in that** said recess (32) is formed on said supporting rod (11) at a connecting region (31) between said rod-like body (12) and the cam-like profile (25) of the pivoting head (13).

5. The kickstand according to one or more of the preceding claims, **characterized in that** the surface (33) of the recess (32) extends between the upper external surface (34) of the rod-like body (12) and said rotation-preventing abutment surface (26).

6. The kickstand according to one or more of the preceding claims, **characterized in that** between said recess (31) and said lower edge (27) of said rear wall (18) there is a minimum distance (A) of 3 millimeters.

7. The kickstand according to one or more of the preceding claims, **characterized in that** said first rotation-preventing abutment surface (26) is flat.

8. The kickstand according to one or more of the preceding claims, **characterized in that** said second rotation-preventing abutment surface (29) is flat.
